# DEMANDE DE BREVET EUROPEEN

(11) **EP 2 166 455 A1**
(43) Date de publication de la demande: **24.03.2010**
(21) Numéro de dépôt: 09290648.6
(22) Date de dépôt: 27.08.2009
(51) Int. Cl.: G06F 11/273

(54) **Procédé et dispositif pour automatiser des procédures de vérification d'équipements dans un aéronef**

(30) Priorité: 15.09.2008 FR 0856198
(71) Demandeur: AIRBUS OPERATIONS, 31060 Toulouse (FR); Airbus, 31700 Blagnac (FR)
(72) Inventeur: Ric, Georges, 31270 Frouzins (FR); Bonzom, Jean-Marc, 31150 Gagnac sur Garonne (FR); Gillet, Jean-Pierre, 31330 Grenade (FR)
(74) Mandataire: Imbert de Tremiolles, Ghislain

(57) **Abrégé**

L'invention a pour objet un procédé et un dispositif de test ou d'évaluation de la configuration d'un équipement d'un aéronef comprenant un système d'information embarqué ayant une partie hautement sécurisée et une partie moins sécurisée, la partie moins sécurisée comprenant une interface réseau adaptée à échanger des données avec un système d'information extérieur, la partie sécurisée comprenant une fonction de maintenance. Après avoir reçu (400) au moins une commande de test ou d'évaluation de la configuration de l'équipement via ladite interface réseau, la commande reçue est codée (410) puis transmise (415) à la partie sécurisée du système d'information de l'aéronef. En réponse à la réception de la commande codée, celle-ci est filtrée (420). En réponse à l'étape de filtrage, la commande codée est traduite et exécutée (425) en relation avec la fonction de maintenance.

## Description

La présente invention concerne les opérations de maintenance et les tests fonctionnels effectués dans les aéronefs et plus particulièrement un procédé et un dispositif pour automatiser, de façon sécurisée, les procédures de vérification d'équipements dans un aéronef depuis un poste distant, en ligne d'assemblage ou lors de l'exploitation de l'aéronef, en utilisant le système d'information embarqué ainsi que sa topologie.

Pour optimiser la fiabilité des aéronefs et augmenter leur rentabilité, des opérations de maintenance en ligne sont fréquemment mises en oeuvre entre les phases de vol.

De façon générale, de telles opérations consistent par exemple, pour des opérateurs de maintenance, à vérifier la configuration matérielle et logicielle des systèmes de l'aéronef, analyser des données mémorisées durant le vol (surveillance continue), modifier certains paramètres de l'aéronef ou certaines données logicielles, lancer des applications logicielles de test et/ou contrôler le changement de configuration logicielle suite à une opération de téléchargement.

Les données analysées sont souvent issues de capteurs et mémorisées dans un dispositif central de diagnostic et de stockage accessible à travers une interface homme-machine de type MCDU (sigle de *Multi-Control Display Unit* en terminologie anglo-saxonne) ou OMT (sigle de *Onboard Maintenance Terminal* en terminologie anglo-saxonne). Cette interface, à travers laquelle peuvent être lancées des opérations interactives, permet d'analyser les données mémorisées, d'accéder aux paramètres de l'aéronef et plus généralement d'exécuter des fonctions de test et de maintenance. A titre d'illustration, les Airbus A320, A330 et A340 sont dotés de MCDU et l'Airbus A380 est doté d'OMT (Airbus, A320, A330, A340 et A380 sont des marques).

L'accès aux systèmes de maintenance des aéronefs est généralement limité aux postes physiques fixes embarqués dans le cockpit. Ainsi, lorsque l'aéronef est au sol, un opérateur de maintenance peut monter dans l'aéronef pour accéder et analyser les données mémorisées, éventuellement modifier les paramètres de celui-ci et lancer des applications de test.

Afin d'assurer l'enchaînement des tâches de manière optimisée, les dispositifs actuels exigent en général la présence permanente d'un opérateur pour vérifier que les opérations se sont bien déroulées.

Alternativement, pour répondre à une demande croissante des compagnies aériennes afin de réduire les temps des opérations de maintenance en ligne, des postes mobiles sont utilisés. Ces derniers, dont le rôle est similaire aux interfaces de type MCDU ou OMT, sont reliés au dispositif central de diagnostic et de stockage par l'intermédiaire de prises de connexion reliées au réseau de l'aéronef.

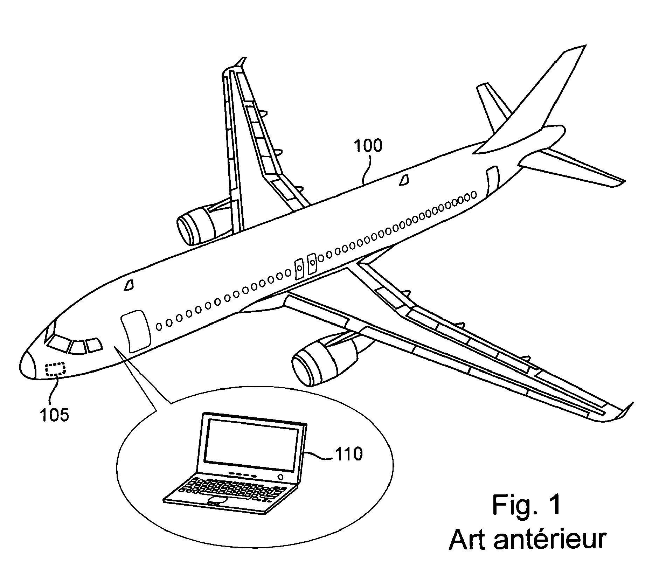

La figure 1 illustre un exemple d'aéronef 100 comprenant un dispositif 105 central de diagnostic et de stockage relié, via un réseau de communication (non représenté), à un poste fixe 110 de maintenance en ligne installé dans le cockpit.

Le dispositif 105 est relié à tous les systèmes de l'aéronef générant des messages de maintenance, par exemple à des capteurs (non représentés) de contrôle des moteurs et des actionneurs des trains d'atterrissage et des gouvernes.

Ainsi, lorsque l'aéronef 100 est au sol, un opérateur de maintenance peut, à l'aide du poste fixe 110, analyser les données de vol de l'aéronef et modifier ses paramètres.

Bien que cette solution réponde aux attentes des compagnies aériennes, il est nécessaire d'utiliser une liaison filaire entre un aéronef et un poste pour effectuer des opérations de maintenance en ligne. Une telle contrainte a notamment pour effet de ralentir les durées des opérations de maintenance et, par conséquent, d'augmenter les coûts d'exploitation des aéronefs.

Pour pallier ces inconvénients, il existe des systèmes de diagnostic utilisant une technologie de communication sans fil selon lesquels les données issues des capteurs sont directement transmissibles au poste mobile de maintenance en ligne. Par exemple, le brevet EP 1 306 305 divulgue un système dans lequel les capteurs sont connectés à des dispositifs de stockage et de transmission des données. Ainsi, sur requête, un poste mobile peut obtenir des données de vol.

Cependant, un tel système se limite à l'accès aux données sans permettre la modification des paramètres d'un aéronef et exige l'utilisation de plusieurs dispositifs de stockage et de transmission.

De la même façon, lors de l'assemblage des aéronefs, les équipes des chaînes finales d'assemblage s'appuient sur les outils interactifs de maintenance pour réaliser tout ou partie des tests fonctionnels de l'aéronef et de suivi de configuration tout au long du processus de fabrication jusqu'à la livraison de l'aéronef.

Cependant, malgré les performances des postes de maintenance, il n'existe pas de moyens permettant d'automatiser certains tests.

En effet, alors que certains postes de maintenance embarqués à bord des aéronefs peuvent être reliés à un réseau de communication permettant l'échange de données entre l'aéronef et des équipements distants, la connexion réseau ne permet pas de contrôler à distance les applications implémentées à bord de l'aéronef ni de transmettre des données à ces applications, pour des raisons de sécurité.

L'invention permet de résoudre au moins un des problèmes exposés précédemment.

L'invention a ainsi pour objet un procédé de test ou d'évaluation de la configuration d'au moins un équipement dans un aéronef, ledit aéronef comprenant un système d'information embarqué, ledit système d'information comprenant une partie sécurisée et une partie moins sécurisée, ladite partie moins sécurisée comprenant une interface réseau adaptée à échanger des données avec un système d'information extérieur audit aéronef, ladite partie sécurisée comprenant au moins une fonction de maintenance, ce procédé comprenant les étapes suivantes,
- réception d'au moins une commande de test ou d'évaluation de la configuration dudit au moins un équipement via ladite interface réseau ;
- codage de ladite au moins une commande reçue ;
- transmission de ladite commande codée à ladite partie sécurisée dudit système d'information dudit aéronef ;
- en réponse à la réception de ladite commande codée, filtrage de ladite au moins une commande de test codée ; et,
- en réponse à ladite étape de filtrage, traduction et exécution de ladite commande codée en relation avec ladite au moins une fonction de maintenance.

Le procédé selon l'invention permet ainsi l'exécution d'une fonction de maintenance dans une partie sécurisée d'un système d'information d'un aéronef à partir d'un poste distant, sans porter atteinte à la sécurité de cette partie du système d'information, en utilisant le système d'information existant et sa topologie.

De façon avantageuse, le procédé comprend en outre une étape de détermination d'un résultat en réponse à ladite exécution de ladite au moins une commande et une étape de transmission dudit résultat audit système d'information extérieur audit aéronef via ladite interface de communication pour permettre à un poste distant de recevoir et d'analyser le résultat d'une fonction exécutée dans une partie sécurisée d'un système d'information d'un aéronef.

Selon un mode de réalisation particulier, ladite étape de transmission dudit résultat comprend une étape de transmission dudit résultat de ladite partie sécurisée dudit système d'information dudit aéronef à ladite partie moins sécurisée dudit système d'information dudit aéronef et une étape de transmission dudit résultat de ladite partie moins sécurisée dudit système d'information dudit aéronef audit système d'information extérieur audit aéronef. Le procédé selon l'invention permet ainsi d'utiliser le système d'information et la topologie existants d'un aéronef pour exécuter une fonction de maintenance dans une partie sécurisée d'un système d'information d'un aéronef et obtenir le résultat de cette exécution.

Toujours selon un mode de réalisation particulier, ladite partie moins sécurisée comprend au moins une seconde fonction de maintenance, distincte de ladite au moins une fonction de maintenance, appelée au moins une première fonction de maintenance, le procédé comprenant en outre une étape d'évaluation de ladite au moins une commande adaptée à déterminer si ladite au moins une commande est destinée à ladite partie sécurisée ou à ladite partie moins sécurisée dudit système d'information dudit aéronef, lesdites étapes de codage, de transmission de filtrage, de traduction et d'exécution de ladite au moins une commande étant exécutées si ladite au moins une commande est destinée à ladite partie sécurisée dudit système d'information dudit aéronef. Le procédé selon l'invention permet ainsi d'optimiser le traitement des commandes d'exécution de fonctions de maintenance selon le destinataire de ces commandes.

De façon avantageuse, le procédé comprend en outre, si ladite au moins une commande est destinée à ladite partie moins sécurisée dudit système d'information dudit aéronef, une étape d'exécution de ladite au moins une commande reçue en relation avec ladite au moins une seconde fonction de maintenance. Ladite au moins une commande reçue est de préférence codée préalablement à son exécution.

Selon un mode de réalisation particulier, le procédé comprend en outre une étape initiale d'établissement d'un canal de communication sécurisé entre ledit système d'information dudit aéronef et ledit système d'information extérieur audit aéronef pour permettre l'échange de données et améliorer la sécurité des transmissions de données entre un poste distant et le système d'information de l'aéronef.

L'invention a également pour objet un programme d'ordinateur comprenant des instructions adaptées à la mise en oeuvre de chacune des étapes du procédé décrit précédemment, un dispositif comprenant des moyens adaptés à la mise en oeuvre de chacune des étapes du procédé décrit précédemment ainsi qu'un aéronef comprenant un tel dispositif.

D'autres avantages, buts et caractéristiques de la présente invention ressortent de la description détaillée qui suit, faite à titre d'exemple non limitatif, au regard des dessins annexés dans lesquels :
- la figure 1 représente un aéronef comprenant un poste fixe de maintenance permettant d'analyser les données de vol de celui-ci et d'en modifier les paramètres selon un schéma standard ;
- la figure 2 représente schématiquement un exemple d'environnement dans lequel la présente invention peut être mise en oeuvre ;
- la figure 3 illustre l'architecture des dispositifs mis en oeuvre dans l'environnement représenté sur la figure 2 ;
- la figure 4 illustre schématiquement l'algorithme mis en oeuvre dans le système d'information d'un aéronef, conformément à l'invention, pour permettre l'automatisation de tests en ligne d'assemblage final de l'aéronef et/ou l'automatisation d'opérations de vérifications périodiques exécutées par la compagnie aérienne exploitant l'aéronef ;
- la figure 5 représente partiellement une trame Ethernet sur laquelle un filtrage peut être effectué ;
- la figure 6 représente une table ASCII et plus particulièrement des caractères pouvant être utilisés pour transmettre une commande de la partie non sécurisée à la partie sécurisée d'un système d'information d'un aéronef, sans compromettre sa sécurité ;
- la figure 7 illustre un exemple de table de correspondance pouvant être utilisée par un module de conversion pour établir des liens de correspondance entre des commandes et des instructions ; et,
- la figure 8 illustre un exemple de dispositif adapté à mettre en oeuvre l'invention ou une partie de l'invention.

Selon un mode de réalisation particulier, l'invention met en oeuvre un système composé du système d'information de l'aéronef, comprenant des moyens de communication tel que des moyens de communication IP (sigle d*'Internet Protocol* en terminologie anglo-saxonne), et un poste distant ou une station de tests automatiques situé, par exemple, au sol. Ce système permet d'assurer l'automatisation de tests et la vérification de la configuration des systèmes logiques d'un aéronef.

Le poste distant ou la station de test automatique est connecté au système d'information embarqué via un réseau sécurisé tel qu'un réseau Ethernet.

La sécurisation de la connexion peut être assurée, par exemple, par un élément au sol intégré au réseau de la compagnie aérienne adapté à mettre en oeuvre un tunnel sécurisé. La technologie utilisée doit, de préférence, permettre de maintenir un niveau de sécurisation élevé tout au long de la durée de vie de l'aéronef.

Pour accéder aux fonctions de maintenance embarquées depuis un poste distant ou une station de test, il est nécessaire d'établir une connexion sécurisée entre un serveur au sol et le composant embarqué qui gère les moyens de communication de l'aéronef. Lorsque le tunnel est établi, des activités peuvent être menées depuis le poste distant ou la station de test.

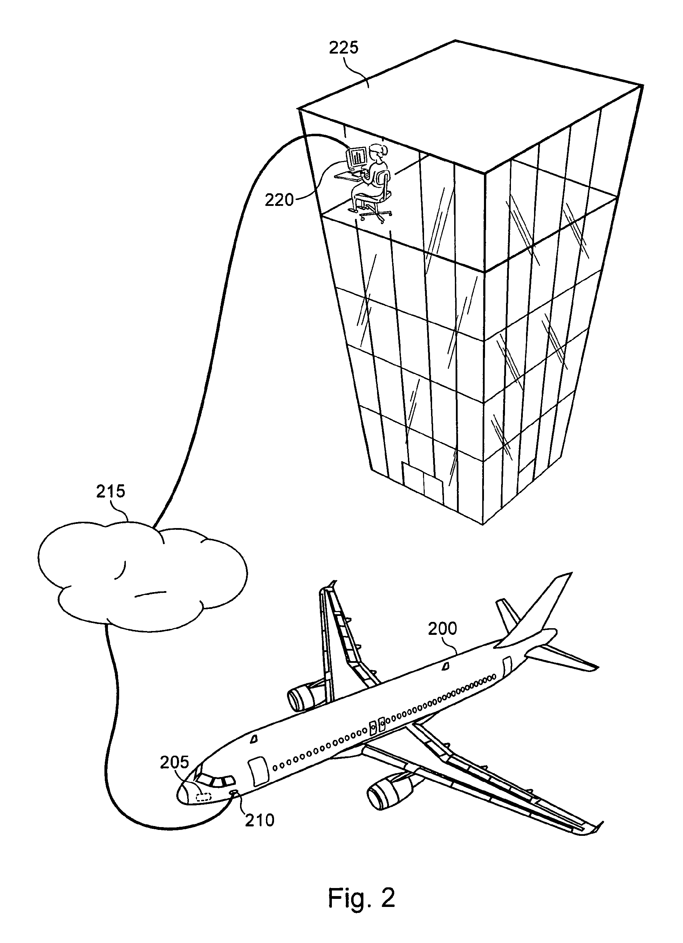

La figure 2 représente schématiquement un exemple d'environnement dans lequel la présente invention peut être mise en oeuvre. Il est ici illustré un aéronef 200 comprenant un dispositif 205 de maintenance, contenant par exemple des outils centralisés de diagnostic et de stockage, relié à une prise de connexion réseau 210 accessible, dans cet exemple, depuis l'extérieur de l'aéronef. La prise de connexion réseau 210 est ici reliée au réseau 215 mettant en oeuvre, par exemple, le protocole IP.

Le dispositif 205 est relié à tous les systèmes de l'aéronef générant des messages de maintenance, par exemple des capteurs (non représentés) de contrôle des moteurs et des actionneurs des trains d'atterrissage et des gouvernes.

Un poste distant 220 de maintenance en ligne, par exemple placé dans un centre de maintenance 225, est relié au dispositif 205 par l'intermédiaire du réseau de communication 215 et de la prise 210.

Ainsi, lorsque l'aéronef 200 est au sol, durant son montage ou son exploitation, un opérateur de maintenance peut, à l'aide du poste distant 220, analyser les données de l'aéronef, modifier ses paramètres et/ou contrôler l'exécution des modules applicatifs de maintenance implémentés dans celui-ci.

Bien que la connexion entre l'aéronef 200 et le réseau 215 soit ici filaire, des technologies de communication sans fil telles que WiMax et/ou WiFi peuvent être utilisées. Dans ce cas, l'aéronef comprend des moyens de communication sans fil adaptés à établir une communication avec un dispositif compatible situé au sol, dans un satellite ou dans tous types de véhicule, ce dispositif étant lui-même relié au réseau 215.

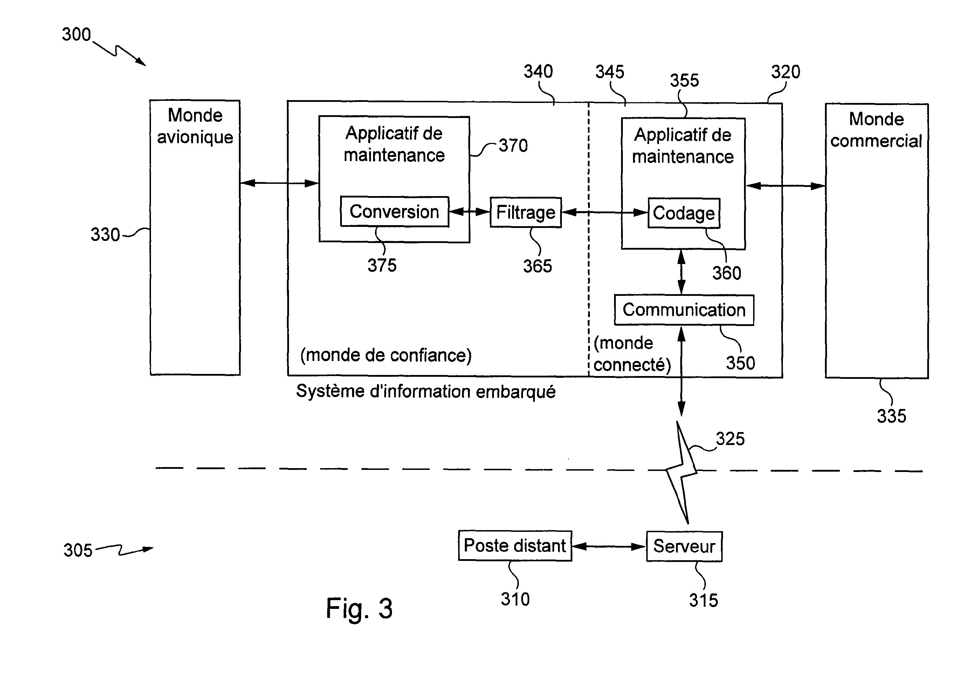

La figure 3 illustre plus précisément l'architecture des dispositifs mis en oeuvre dans l'environnement représenté sur la figure 2. La référence 300 désigne ici les systèmes embarqués à bord de l'aéronef tandis que la référence 305 désigne les systèmes distants appartenant, par exemple, au centre de contrôle de maintenance, aussi appelé MCC (sigle de *Maintenance Controi Center* en terminologie anglo-saxonne), au système d'information de maintenance, aussi appelé MIS (acronyme de *Maintenance Information System* en terminologie anglo-saxonne) ou au centre d'assemblage final.

Le système distant comprend un poste distant ou une station de test 310, par exemple un ordinateur portable de type PC (sigle de *Personal Computer* en terminologie anglo-saxonne), et un serveur 315 permettant d'établir une communication de données avec le système d'information embarqué 320 de l'aéronef à travers le réseau 325.

Deux types de données peuvent être traitées par le poste distant ou la station de test : les données issues de l'aéronef et les données de commandes permettant de gérer les tests.

Le système d'information embarqué 320 de l'aéronef est connecté aux systèmes avioniques 330, par exemple les systèmes de commande de vol, le pilote automatique et les systèmes de surveillance de l'environnement, et aux systèmes du monde commercial 335, dit « ouvert », à la différence du monde avionique, en raison de l'origine des données traitées.

Par ailleurs, le système d'information embarqué 320 comprend deux parties, une partie hautement sécurisée 340, appelée monde de confiance, et une partie moins sécurisée 345, appelée monde connecté.

La partie moins sécurisée 345 comprend un module de communication 350 adapté à recevoir et à transmettre des données depuis et vers le réseau 325. Le module de communication 350 est relié à un module applicatif de maintenance 355 qui comprend lui-même un module de codage 360 utilisé pour coder les données devant être transmises à la partie sécurisée 340 du système d'information embarqué 320.

La partie sécurisée 340 comprend un module de filtrage 365 adapté à contrôler les données transmises par la partie moins sécurisée 345.

La partie sécurisée 340 comprend en outre un module applicatif de maintenance 370 comprenant lui-même un module de conversion 375 adapté à convertir les données reçues du module de filtrage 365 afin qu'elles soient exploitables par le module applicatif de maintenance 370.

Comme illustré, le module applicatif de maintenance 355 de la partie moins sécurisée 345 est relié aux systèmes du monde commercial 335 tandis que le module applicatif de maintenance 370 de la partie sécurisée 340 est relié aux systèmes du monde avionique 330.

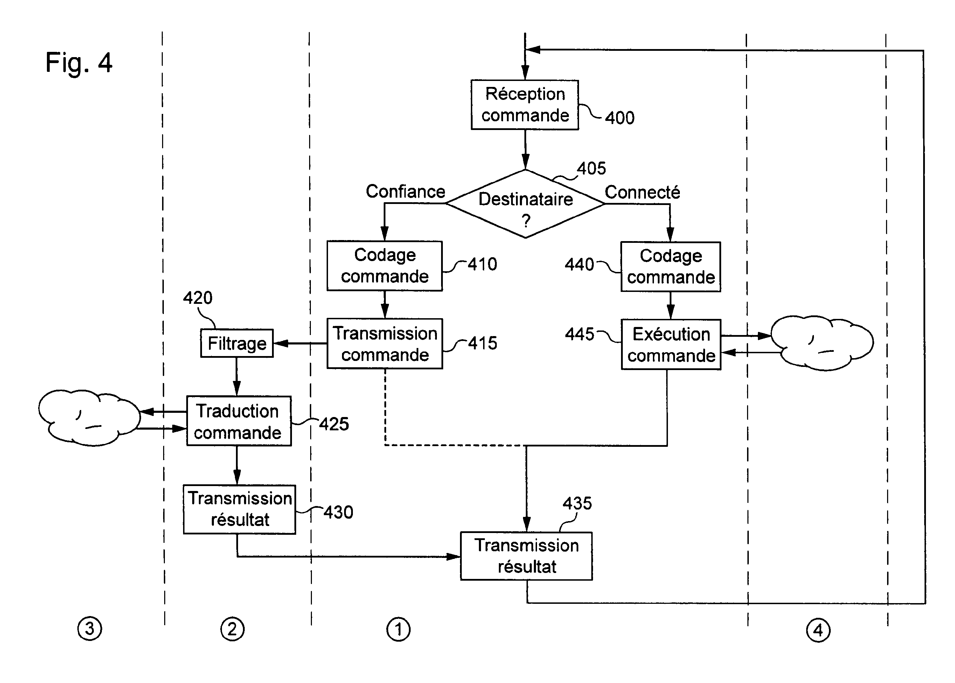

La figure 4 illustre schématiquement l'algorithme mis en oeuvre dans le système d'information d'un aéronef, conformément à l'invention, pour permettre l'automatisation de tests en ligne d'assemblage final de l'aéronef et/ou l'automatisation d'opérations de vérifications périodiques exécutées par la compagnie aérienne exploitant l'aéronef.

La référence ① désigne ici la partie de l'algorithme mise en oeuvre dans la partie non sécurisée du système d'information de l'aéronef, la référence ② désigne la partie de l'algorithme mise en oeuvre dans la partie sécurisée du système d'information de l'aéronef, la référence ③ désigne les fonctions mises en oeuvre dans le monde de confiance, c'est-à-dire ici l'avionique, et la référence ④ désigne les fonctions mises en oeuvre dans le monde commercial.

Après avoir reçu une commande (étape 400) d'un poste distant ou d'une station de test via, par exemple, un tunnel de communication sécurisé préalablement établi, un test est effectué (étape 405) pour identifier le destinataire de la commande reçue.

Si le destinataire de la commande reçue est situé dans le monde de confiance, la commande est codée (étape 410) pour la rendre compatible avec le filtre utilisé en entrée de la partie sécurisée, puis transmise à celui-ci (étape 415). L'échange de commande et/ou de données entre les parties sécurisée et non sécurisée est de préférence réalisé via un réseau interne dédié.

Le codage consiste, par exemple, à coder les commandes sous forme de trames ayant un format et/ou des caractéristiques prédéterminés. Le filtrage consiste alors à vérifier ce format et/ou ces caractéristiques.

Comme indiqué précédemment, lorsque la partie sécurisée du système d'information de l'aéronef reçoit une commande de la partie non sécurisée, la commande reçue est filtrée (étape 420) à l'aide d'un filtre robuste. Les commandes non conformes aux critères prédéterminés du filtre sont rejetées. Les commandes filtrées sont converties ou traduites (étape 425) par un module de traduction de la partie sécurisée pour permettre leur exécution par la fonction de maintenance visée.

La fonction de maintenance sollicitée, par exemple un module de gestion de tests interactifs ou un module de gestion de configuration de test, exécute la commande reçue ou gère son exécution et envoie, de préférence, une réponse, par exemple une configuration ou un résultat, vers le module de traduction de commande qui construit un fichier correspondant. Ce fichier est ensuite transmis (étape 430) vers la fonction de maintenance de la partie non sécurisée du système d'information de l'aéronef qui transfère les informations reçues vers le poste distant (étape 435).

Si le destinataire de la commande reçue est situé dans le monde connecté, la commande est codée (étape 440) de façon standard pour la rendre compatible avec les protocoles utilisés dans les systèmes du monde connecté.

La fonction de maintenance sollicitée, par exemple un module de gestion de tests interactifs, exécute la commande reçue (étape 445) ou gère son exécution. Si une réponse est déterminée, par exemple une configuration ou un résultat, celle-ci est transmise vers le poste distant (étape 435).

L'algorithme illustré sur la figure 4 permet de mettre en oeuvre différents scénarii de tests et/ou de vérification lors de l'assemblage final et/ou lors de l'exploitation de l'aéronef.

Selon un premier exemple, le mode opératoire pour réaliser une séquence de tests automatiques dans l'avionique est le suivant (bien qu'une telle séquence de tests soit ici réalisée en ligne d'assemblage final de l'aéronef, une séquence équivalente peut être utilisée au cours de l'exploitation de l'aéronef).

Une application de test, hébergée par le poste distant, envoie tout d'abord une commande d'initialisation sur le réseau vers un élément de la fonction de maintenance hébergé dans le monde connecté. Après l'avoir reçue (étape 400) et avoir déterminé que cette commande est destinée à la partie sécurisée du système d'information de l'aéronef (étape 405), l'élément de la fonction de maintenance code la commande pour la rendre compatible avec le filtre robuste (étape 410). La commande codée est ensuite transmise au filtre de la partie sécurisée (étape 415).

Après avoir été filtrée (étape 420) et si elle n'a pas été rejetée, la commande est traduite et transmise à la fonction de maintenance correspondante de la partie sécurisée pour être exécutée (étape 425). La fonction de maintenance sollicitée, ici le module de gestion de test interactif, exécute la commande reçue et, en réponse à la commande d'initialisation, transmet sa configuration vers le traducteur de commande qui construit, par exemple, un fichier correspondant.

Le fichier est ensuite envoyé vers la fonction de maintenance du monde connecté (étape 430) qui transmet à son tour le fichier vers le poste distant (étape 435).

Le poste distant vérifie que le fichier résultant est conforme à la commande d'initialisation. Dans l'affirmative, le poste distant construit la commande suivante pour initier une action de test et la transmet au système d'information de l'aéronef. Si le résultat n'est pas conforme, un message d'erreur est enregistré.

Après avoir reçu une première commande de test (étape 400) et déterminé que celle-ci est destinée à l'avionique (étape 405), la fonction de maintenance de la partie non sécurisée du système d'information de l'aéronef code la commande (étape 410) pour la rendre compatible avec le filtre de la partie sécurisée et la transmet à ce dernier (étape 415).

Après avoir été filtrée (étape 420), la commande est traduite pour permettre à la fonction de maintenance, ici le module de gestion de test interactif ou le module de gestion de configuration des équipements de l'aéronef, de lancer le test (étape 425). La ou les cibles réalisent le test et, le cas échéant, la fonction de maintenance calcule le résultat du test. Le résultat est transmis, via le traducteur de commande qui construit, par exemple, un fichier correspondant, à la fonction de maintenance de la partie non sécurisée du système d'information de l'aéronef (étape 430) qui le retransmet au poste distant (étape 435).

Le poste distant peut alors analyser le fichier de résultat de test et l'enregistrer.

Pour automatiser l'ensemble des tests d'un scénario, la séquence ci-dessus doit être répétée pour toutes les cibles concernées.

La commande de test transmise à l'avionique peut viser, en particulier, un test en tant que tel, par exemple un test fonctionnel d'un équipement de l'aéronef, ou la gestion de la configuration des équipements de l'aéronef, notamment un élément de l'avionique.

Il convient de remarquer qu'il existe plusieurs méthodes pour déterminer la configuration des équipements de l'aéronef. Une première solution consiste à interroger chaque cible, c'est-à-dire chaque élément testé. Alternativement, une seconde solution consiste à accéder à un fichier de configuration déterminé et enregistré par la fonction de maintenance. Selon cette seconde solution, il n'est pas nécessaire d'analyser les configurations des équipements lors du test.

Selon un deuxième exemple, le mode opératoire pour réaliser une séquence de tests automatiques dans les systèmes du mode connecté et commercial est le suivant (à nouveau, cette telle séquence de tests est ici réalisée en ligne d'assemblage final de l'aéronef).

Comme précédemment, une commande de test est transmise sur le réseau par le poste distant qui comprend une application de test vers un élément de la fonction de maintenance hébergé dans la partie non sécurisée du système d'information de l'aéronef. Après avoir été reçue (étape 400) et après avoir déterminé que la commande reçue est destinée aux systèmes du monde connecté (étape 405), l'élément de la fonction de maintenance code la commande (étape 440) pour la rendre compatible avec les protocoles du monde connecté.

La cible du monde connecté réalise le test (445). Si un résultat est attendu, l'élément de la fonction de maintenance récupère le résultat du test et le transmet au poste distant (étape 435) qui peut analyser le résultat de test et l'enregistrer.

Pour automatiser l'ensemble des tests d'un scénario, la séquence précédente est répétée pour chaque cible visée.

Comme indiqué précédemment, le filtre a pour objet de filtrer les données reçues du réseau afin de ne transmettre que les données correctement formatées à la partie sécurisée du système d'information de l'aéronef.

Le module de filtrage est, de préférence, basé sur le principe du tamis, c'est-à-dire sur un mécanisme itératif, selon lequel plusieurs niveaux de filtres sont utilisés pour optimiser les temps de traitement. Il est ainsi composé de plusieurs éléments permettant de filtrer de plus en plus finement les données reçues afin de ne laisser passer que les données correspondant aux commandes valides.

Le module de filtrage nécessite qu'un format de commande soit défini afin de ne traiter qu'un certain type de trames réseau. Le format et le protocole de transport associé peuvent être définis sous forme de paramètres, accessibles au module de filtrage. Par exemple, de tels paramètres peuvent préciser que les commandes sont reçues sous forme de trames Ethernet, indiquer les sources autorisées à transmettre de telles commandes, donner une durée de vie maximale des trames au-delà de laquelle les trames ne sont pas prises en compte et indiquer les caractères pouvant être valablement utilisés pour coder une commande dans une trame.

A titre d'illustration, le filtrage de trames Ethernet peut s'effectuer en trois étapes.

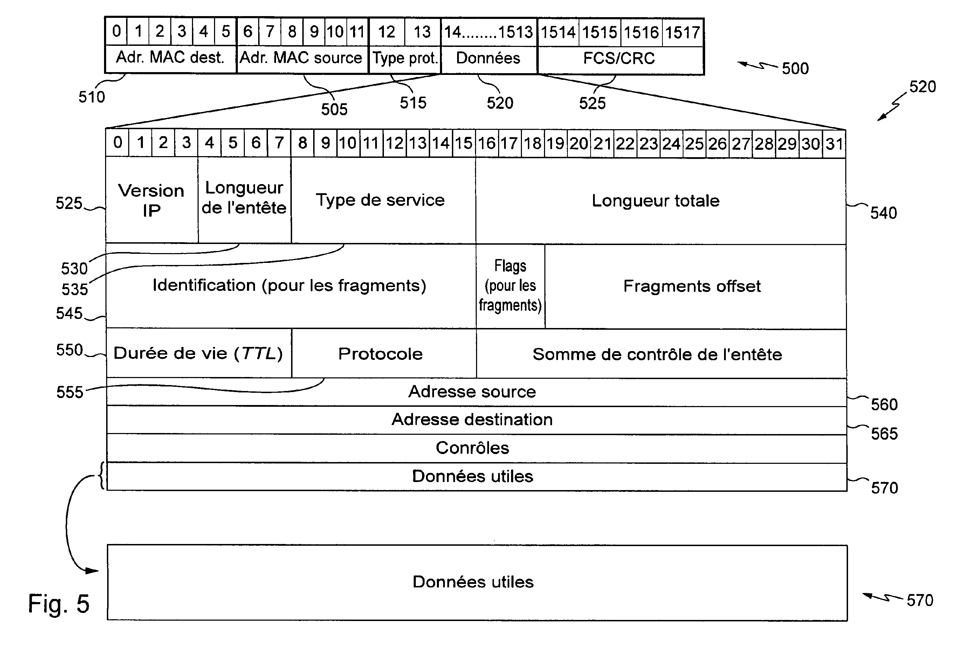

La figure 5 représente partiellement une trame Ethernet 500 sur laquelle un filtrage peut être effectué selon ces trois étapes.

Tout d'abord, chaque trame est analysée en vérifiant, par exemple, les adresses physiques source 505 et destination 510, en particulier les adresses MAC (acronyme de *Media Access Control* en terminologie anglo-saxonne), le type de protocole 515 et la signature 525 de la trame complète. Les données 520 de la trame ne sont pas analysées dans cette première étape.

Si les adresses physiques source 505 et destination 510, le type de protocole 515 et la signature 525 ne sont pas conformes aux paramètres du module de filtrage, la trame est rejetée.

Au contraire, si les adresses physiques source 505 et destination 510, le type de protocole 515 et la signature 525 sont conformes aux paramètres du module de filtrage, une deuxième étape de filtrage est mise en oeuvre.

Il convient de remarquer ici que la première étape de filtrage peut porter sur d'autres données que celles citées ou, au contraire, sur moins de données.

La deuxième étape consiste par exemple à analyser l'entête des données 520. En particulier, cette deuxième étape de filtrage peut consister à vérifier la version IP (sigle de *Internet Protocol* en terminologie anglo-saxonne) 525, la longueur 530 de l'en-tête, le type de service 535, la longueur totale 540 des données, l'identification 545 utilisée pour reconstituer les fragments, la durée de vie 550, aussi appelée TTL (sigle de *Time To Live* en terminologie anglo-saxonne), le protocole 555 et les adresses source 560 et destination 565.

A nouveau, si toutes ces informations ne sont pas conformes aux paramètres du module de filtrage, la trame est rejetée. Au contraire, si toutes ces informations sont conformes aux paramètres du module de filtrage, une troisième étape de filtrage est mise en oeuvre.

Il convient de remarquer ici aussi que la seconde étape de filtrage peut porter sur d'autres données que celles citées ou, au contraire, sur moins de données.

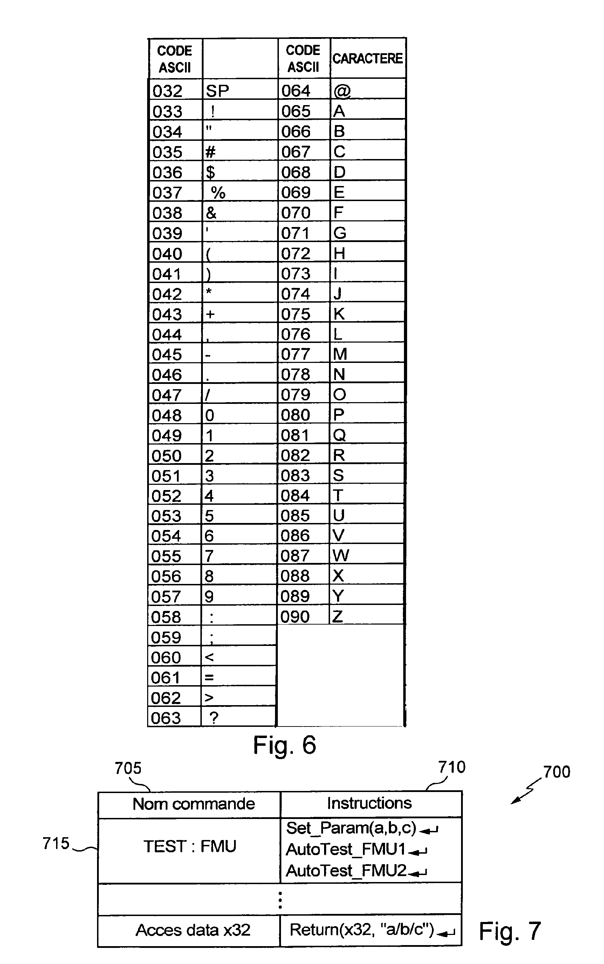

La troisième étape consiste ici à analyser les caractères des données utiles 570 de la trame. Cette étape permet ainsi de vérifier que les caractères nécessaires à la construction de la commande ne peuvent pas être utilisés pour construire du code exécutable. De façon avantageuse, tous les caractères des données utiles doivent être choisis dans la table ASCII, dans les valeurs comprises entre 032 et 090, comme illustré sur la figure 6.

Si un caractère des données utiles 570 n'appartient pas à la table ASCII, entre les valeurs 032 et 090, la trame est rejetée. Au contraire, si tous les caractères des données utiles 570 appartiennent à la table ASCII, entre les valeurs 032 et 090, la trame est transmise à la partie sécurisée du système d'information de l'aéronef pour y être traitée.

Naturellement, la troisième étape de filtrage peut porter sur d'autres critères, en particulier des critères plus restrictifs.

La traduction des commandes filtrées a pour objet d'établir une interface entre les fonctions de maintenance et le réseau.

Ce module est développé, de préférence, de manière à ce que seules les commandes liées à des instructions correspondant à des fonctions de maintenance implémentées dans la partie sécurisée du système d'information de l'aéronef aient une action. Ceci signifie que ce module connaît les instructions qui peuvent être exécutées par chaque application. En d'autres termes, une liste d'instructions ou de séquence d'instructions est, de préférence, préalablement mémorisée. Une telle liste définit un ensemble de configurations d'enchaînements possibles d'instructions. Cette liste peut également définir des combinaisons interdites.

Cette configuration est construite de telle sorte que l'enchaînement des instructions d'une application est connu a priori. Ceci permet au module de conversion de vérifier que les commandes qu'il reçoit et l'enchaînement des instructions associées est conforme à ce que l'application est supposée exécuter. Cette vérification permet au module de conversion de rejeter tout enchaînement non attendu et assure ainsi que des opérations dangereuses ne peuvent pas être exécutées.

Dans un mode de réalisation particulier, le module de conversion utilise une table de correspondance entre des noms des commandes et les fonctions effectives, c'est-à-dire des séquences d'instructions, afin d'associer une ou plusieurs instructions aux noms de commandes reçus du poste distant. Il convient de noter ici que les instructions peuvent prendre plusieurs formes. Il s'agit par exemple de pointeurs vers des fonctions ou de commandes interfacées avec le système d'exploitation du dispositif de maintenance. Les instructions permettent notamment de simuler une action entrée par un utilisateur sur l'interface du dispositif de maintenance accessible dans l'aéronef.

La figure 7 illustre un exemple de table de correspondance 700 pouvant être utilisée par le module de conversion.

La table de correspondance 700 comprend ici deux colonnes : une colonne 705 contenant les noms des commandes et une colonne 710 contenant la liste des instructions associées à chaque commande.

La ligne 715 illustre un exemple d'une commande de test d'un dispositif de gestion de vol, appelé FMU (sigle de *Flight Management Unit* en terminologie anglo-saxonne). Le nom de la commande utilisable par un opérateur de maintenance à partir d'un poste distant est ici TEST : FMU. Comme représenté, cette commande correspond à l'exécution de la séquence d'instructions comprenant les instructions Set_Param(a, b, c), AutoTest_FMU1 et AutoTest_FMU2.

Après qu'une commande ait été analysée et déclarée conforme, le module de conversion transmet les instructions correspondantes à l'application concernée. L'application exécute les instructions et retourne, généralement, une réponse. Cette réponse est reçue par le module de conversion qui construit un message de réponse, de préférence signé.

A titre d'illustration, en reprenant l'exemple illustré sur la figure 7, le mode opératoire pour l'exécution des instructions correspondant à la commande TEST : FMU est le suivant,
- l'opérateur entre la commande TEST : FMU sur le poste distant ;
- la commande TEST : FMU est transmise au système d'information de l'aéronef à travers un réseau de communication ;
- la commande reçue par l'aéronef est codée puis filtrée ;
- la séquence d'instructions correspondant à la commande filtrée est identifiée, ici les instructions Set_Param(a, b, c), AutoTest_FMU1 et AutoTest_FMU2 ;
- ces instructions sont transmises par une couche logicielle de type API (sigle de *Application Programming Interface* en terminologie anglo-saxonne) aux applications visées (comme si la commande avait été générée par des sélections de touches sur un poste fixe) ;
- les applications visées exécutent les instructions conformément à la commande et transmettent les résultats au module de conversion via la couche logicielle de type API ; et,
- le module de conversion forme un message de réponse, par exemple en construisant une page d'écran ou une partie de page d'écran comprenant les résultats, signe le message de réponse pour attester de l'origine et de l'intégrité de l'information fournie et transmet le message de réponse au poste distant via le réseau de communication.

Il est également possible, dans le cas de tests automatiques, d'utiliser une application logicielle implémentée sur le poste distant pour générer un enchaînement de commandes afin de créer un scénario de test complet.

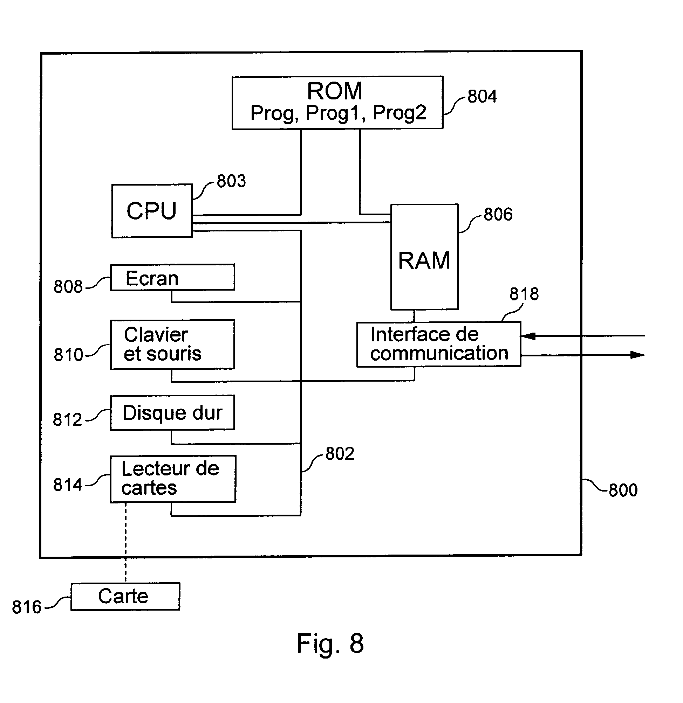

Un dispositif adapté à mettre en oeuvre l'invention ou une partie de l'invention est illustré sur la figure 8. Le dispositif 800 est par exemple un calculateur ou un micro-ordinateur.

Le dispositif 800 comporte ici un bus de communication 802 auquel sont reliés :
- une unité centrale de traitement ou microprocesseur 803 (CPU, *Central Processing Unit) ;*
- une mémoire morte 804 (ROM, acronyme de *Read Only Memory* en terminologie anglo-saxonne) pouvant comporter les programmes "Prog", "Prog1" et "Prog2" ;
- une mémoire vive ou mémoire cache 806 (RAM, acronyme de *Random Access Memory* en terminologie anglo-saxonne) comportant des registres adaptés à enregistrer des variables et paramètres créés et modifiés au cours de l'exécution des programmes précités ; et,
- une interface de communication 818 adaptée à transmettre et à recevoir des données.

Optionnellement, le dispositif 800 peut également disposer :
- d'un écran 808 permettant de visualiser des données et/ou de servir d'interface graphique avec l'utilisateur qui pourra interagir avec les programmes selon l'invention, à l'aide d'un clavier et d'une souris 810 ou d'un autre dispositif de pointage tel qu'un crayon optique, un écran tactile ou une télécommande ;
- d'un disque dur 812 pouvant comporter les programmes "Prog", "Prog1" et "Prog2" précités et des données traitées ou à traiter selon l'invention ; et,
- d'un lecteur de cartes mémoires 814 adapté à recevoir une carte mémoire 816 et à y lire ou à y écrire des données traitées ou à traiter selon l'invention.

Le bus de communication permet la communication et l'interopérabilité entre les différents éléments inclus dans le dispositif 800 ou reliés à lui. La représentation du bus n'est pas limitative et, notamment, l'unité centrale est susceptible de communiquer des instructions à tout élément du dispositif 800 directement ou par l'intermédiaire d'un autre élément du dispositif 800.

Le code exécutable de chaque programme permettant au dispositif programmable de mettre en oeuvre les processus selon l'invention, peut être stocké, par exemple, dans le disque dur 812 ou en mémoire morte 804.

Selon une variante, la carte mémoire 816 peut contenir des données, notamment des clés de signature, ainsi que le code exécutable des programmes précités qui, une fois lu par le dispositif 800, sera stocké dans le disque dur 812.

Selon une autre variante, le code exécutable des programmes pourra être reçu, au moins partiellement, par l'intermédiaire de l'interface 818, pour être stocké de façon identique à celle décrite précédemment.

De manière plus générale, le ou les programmes pourront être chargés dans un des moyens de stockage du dispositif 800 avant d'être exécutés.

L'unité centrale 803 va commander et diriger l'exécution des instructions ou portions de code logiciel du ou des programmes selon l'invention, instructions qui sont stockées dans le disque dur 812 ou dans la mémoire morte 804 ou bien dans les autres éléments de stockage précités. Lors de la mise sous tension, le ou les programmes qui sont stockés dans une mémoire non volatile, par exemple le disque dur 812 ou la mémoire morte 804, sont transférés dans la mémoire vive 806 qui contient alors le code exécutable du ou des programmes selon l'invention, ainsi que des registres pour mémoriser les variables et paramètres nécessaires à la mise en oeuvre de l'invention.

L'appareil de communication comportant le dispositif selon l'invention peut également être un appareil programmé. Cet appareil contient alors le code du ou des programmes informatiques par exemple figé dans un circuit intégré à application spécifique (ASIC).

Il convient de remarquer que les modules applicatifs de maintenance de l'avionique, comme toutes les applications logicielles embarquées de la partie sécurisée du système d'information des aéronefs, sont développés suivant des normes aéronautiques strictes permettant de garantir un certain niveau de sécurité et de démontrer un niveau de prédiction du comportement du système.

A titre d'illustration, la plateforme d'hébergement des modules applicatifs de maintenance de l'avionique, dont le niveau d'assurance qualité logiciel ciblé est DAL C, est développée de manière à ce que le niveau de maîtrise du code embarqué assure, en particulier, l'intégrité des informations générées (la plateforme d'hébergement est, par exemple, développée suivant la norme aéronautique DO-178B).

Ainsi, la mise en oeuvre de l'invention dans un tel contexte permet de garantir un certain niveau d'intégrité des données et des résultats transmis au poste distant.

Naturellement, pour satisfaire des besoins spécifiques, une personne compétente dans le domaine de l'invention pourra appliquer des modifications dans la description précédente.

## Revendications

1. Procédé de test ou d'évaluation de la configuration d'au moins un équipement dans un aéronef, ledit aéronef comprenant un système d'information embarqué, ledit système d'information comprenant une partie sécurisée et une partie moins sécurisée, ladite partie moins sécurisée comprenant une interface réseau adaptée à échanger des données avec un système d'information extérieur audit aéronef, ladite partie sécurisée comprenant au moins une fonction de maintenance, ce procédé étant **caractérisé en ce qu'**il comprend les étapes suivantes,
- réception (400) d'au moins une commande de test ou d'évaluation de la configuration dudit au moins un équipement via ladite interface réseau ;
- codage (410) de ladite au moins une commande reçue ;
- transmission (415) de ladite commande codée à ladite partie sécurisée dudit système d'information dudit aéronef ;
- en réponse à la réception de ladite commande codée, filtrage (420) de ladite au moins une commande de test codée ; et,
- en réponse à ladite étape de filtrage, traduction et exécution (425) de ladite commande codée en relation avec ladite au moins une fonction de maintenance.

2. Procédé selon la revendication 1 comprenant en outre une étape de détermination d'un résultat en réponse à ladite exécution de ladite au moins une commande et une étape de transmission (430, 435) dudit résultat audit système d'information extérieur audit aéronef via ladite interface de communication.

3. Procédé selon la revendication 2 selon lequel ladite étape de transmission dudit résultat comprend une étape de transmission dudit résultat de ladite partie sécurisée dudit système d'information dudit aéronef à ladite partie moins sécurisée dudit système d'information dudit aéronef et une étape de transmission dudit résultat de ladite partie moins sécurisée dudit système d'information dudit aéronef audit système d'information extérieur audit aéronef.

4. Procédé selon l'une quelconque des revendications précédentes selon lequel ladite partie moins sécurisée comprend au moins une seconde fonction de maintenance, distincte de ladite au moins une fonction de maintenance, appelée au moins une première fonction de maintenance, le procédé comprenant en outre une étape d'évaluation de ladite au moins une commande adaptée à déterminer si ladite au moins une commande est destinée à ladite partie sécurisée ou à ladite partie moins sécurisée dudit système d'information dudit aéronef, lesdites étapes de codage, de transmission de filtrage, de traduction et d'exécution de ladite au moins une commande étant exécutées si ladite au moins une commande est destinée à ladite partie sécurisée dudit système d'information dudit aéronef.

5. Procédé selon la revendication précédente comprenant en outre, si ladite au moins une commande est destinée à ladite partie moins sécurisée dudit système d'information dudit aéronef, une étape d'exécution (445) de ladite au moins une commande reçue en relation avec ladite au moins une seconde fonction de maintenance.

6. Procédé selon la revendication précédente selon lequel ladite au moins une commande reçue est codée (440) préalablement à son exécution.

7. Procédé selon l'une quelconque des revendications précédentes comprenant en outre une étape initiale d'établissement d'un canal de communication sécurisé entre ledit système d'information dudit aéronef et ledit système d'information extérieur audit aéronef.

8. Programme d'ordinateur comprenant des instructions adaptées à la mise en oeuvre de chacune des étapes du procédé selon l'une quelconque des revendications précédentes lorsque ledit programme est exécuté sur un ordinateur.

9. Dispositif comprenant des moyens adaptés à la mise en oeuvre de chacune des étapes du procédé selon l'une quelconque des revendications 1 à 7.

10. Aéronef comprenant le dispositif selon la revendication précédente.
